# EUROPEAN PATENT APPLICATION

(11) **EP 4 513 365 A1**
(43) Date of publication of application: **26.02.2025**
(21) Application number: 22938314.6
(22) Date of filing: 09.12.2022
(51) Int. Cl.: G06F 21/55, G06F 12/1009, G06F 9/54, G06F 9/455

(54) **METHOD FOR PROCESSING DATA IN VEHICLE AND RELATED DEVICE**

(30) Priority: 21.04.2022 CN 202210421778
(71) Applicant: Shenzhen Yinwang Intelligent Technologies Co., Ltd., Shenzhen, Guangdong 518129 (CN)
(72) Inventor: TAO, Zhe, Shenzhen, Guangdong 518129 (CN); XU, Xiangyi, Shenzhen, Guangdong 518129 (CN); LIN, Feibin, Shenzhen, Guangdong 518129 (CN)
(74) Representative: Gill Jennings & Every LLP
(86) International application number: PCT/CN2022/137880
(87) International publication number: WO 2023/202096

(57) **Abstract**

A processing method for data in a vehicle and a related device are provided. In the method, a computer technology can be applied to the field of vehicles. The vehicle includes hardware devices of N safety levels and N virtual machine monitors corresponding to the hardware devices of the N safety levels. The virtual machine monitor is deployed at a virtualization layer. An operating system runs on each virtual machine monitor. The method includes: A first virtual machine monitor obtains a target access request. The target access request is an access request initiated by an operating system in the vehicle for a hardware device in the vehicle. If an access address of the target access request falls outside a management range of the first virtual machine monitor, the first virtual machine monitor sends indication information to a second virtual machine monitor. The indication information is used to request the second virtual machine monitor to perform an access operation that the target access request points to. Isolation between different safety levels is implemented on hardware and software, and no intrusive modification to the operating system is required.

## Description

This application claims priority to Chinese Patent Application No. 202210421778.4, filed with the China National Intellectual Property Administration on April 21, 2022 and entitled "PROCESSING METHOD FOR DATA IN VEHICLE AND RELATED DEVICE", which is incorporated herein by reference in its entirety.

### TECHNICAL FIELD

This application relates to the field of computer technologies, and in particular, to a processing method for data in a vehicle and a related device.

### BACKGROUND

ISO 26262 is an international standard for improving functional safety of electronic and electrical products in the field of vehicles, to assess and specify vehicle safety risks. ISO 26262 introduces a concept of automotive safety integrity level (automotive safety integrity level, ASIL) and defines four different ASILs: ASIL-A, ASIL-B, ASIL-C, and ASIL-D. ASIL-D is the highest safety integrity level, and ASIL-A is the lowest safety integrity level.

In some conventional technologies, to meet a safety requirement in ISO 26262, a vehicle includes hardware devices of different safety levels. An operating system is deployed on a hardware device of each safety level. An operating system of a low safety level cannot directly access a hardware device managed by an operating system of a high safety level. Instead, a request needs to be sent to the operating system of the high safety level, to access the hardware device of the high safety level by using the operating system of the high safety level.

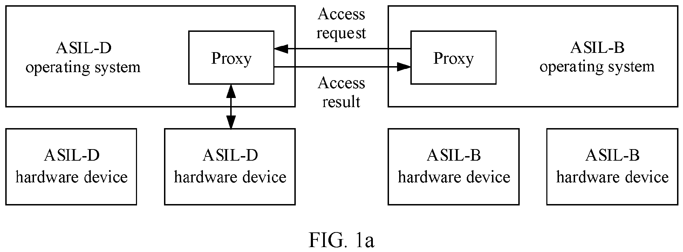

Specifically, refer to FIG. 1a. FIG. 1a is an architectural diagram of a vehicle in the conventional technology according to an embodiment of this application. In FIG. 1a, for example, the vehicle includes hardware devices of two safety levels (that is, ASIL-B and ASIL-D in FIG. 1a). Different operating systems are directly deployed on hardware devices of different safety levels, and proxy (Proxy) modules need to be additionally deployed in different operating systems. When an ASIL-B operating system needs to access a hardware device managed by an ASIL-D operating system, a proxy module in the ASIL-B operating system may send an access request to a proxy module in the ASIL-D operating system, to perform an access operation on the hardware device through the ASIL-D operating system. The proxy module in the ASIL-D operating system then sends, to the proxy module in the ASIL-B operating system, an access result corresponding to the access request.

In the foregoing manner, the proxy module is introduced into the operating system. That is, there is an intrusive modification to the operating system. This results in a large amount of modification to code of the operating system and poor maintainability of the operating system. Therefore, a solution that does not have an intrusive modification to an operating system needs to be urgently provided.

### SUMMARY

Embodiments of this application provide a processing method for data in a vehicle and a related device, so that isolation between different safety levels is implemented on both hardware and software. In addition, when determining that an access address of a target access request falls outside a management range, a first virtual machine monitor sends indication information to a second virtual machine monitor. The indication information is used to request the second virtual machine monitor to perform an access operation that the target access request points to. The foregoing process is implemented by using the virtual machine monitor, and no intrusive modification to an operating system is required, to avoid a large amount of modification to code of the operating system, and avoid lowering maintainability of the operating system.

To resolve the foregoing technical problem, embodiments of this application provide the following technical solutions.

According to a first aspect, an embodiment of this application provides a processing method for data in a vehicle, so that a computer technology can be applied to the field of vehicles. The vehicle includes hardware devices of N safety levels and N virtual machine monitors corresponding to the hardware devices of the N safety levels. The virtual machine monitor is deployed at a virtualization layer. N is an integer greater than or equal to 2. At least one operating system runs on each virtual machine monitor. The N virtual machine monitors include a first virtual machine monitor and a second virtual machine monitor. The method includes: The first virtual machine monitor obtains a target access request. The target access request is an access request initiated by an operating system in the vehicle for a hardware device in the vehicle. The access request may be specifically represented as a read request for data in the hardware device in the vehicle, or writing data into the hardware device in the vehicle. Further, the target access request may be initiated by a first operating system running on the first virtual machine monitor, or may be initiated by an operating system running on another virtual machine monitor in the vehicle.

First indication information may be preconfigured on the first virtual machine monitor. The first indication information includes a range of a physical address managed by each virtual machine monitor in the vehicle. The range of the physical address managed by each virtual machine monitor depends on a range of a physical address of a hardware device that is of a safety level and that corresponds to the virtual machine monitor. If the first virtual machine monitor determines, based on the first indication information, that the access address of the target access request falls outside the management range of the first virtual machine monitor, the first virtual machine monitor sends target indication information to the second virtual machine monitor. The target indication information is used to request the second virtual machine monitor to perform an access operation that the target access request points to. The access operation may include writing data into a hardware device that the target access request points to, or reading data from a hardware device that the target access request points to.

In this implementation, the hardware devices of the N safety levels and the N virtual machine monitors corresponding to the hardware devices of the N safety levels are configured in the vehicle, and the at least one operating system runs on each virtual machine monitor, so that isolation between different safety levels is implemented on both hardware and software. In addition, after the operating system in the vehicle initiates the access request for the hardware device in the vehicle, when determining that the access address of the target access request falls outside the management range, the first virtual machine monitor sends the indication information to the second virtual machine monitor. The indication information is used to request the second virtual machine monitor to perform the access operation that the target access request points to. The foregoing process is implemented by using the virtual machine monitor. The virtual machine monitor is deployed at the virtualization layer. That is, no intrusive modification to the operating system is required for implementation of the foregoing process, to avoid a large amount of modification to code of the operating system, and avoid lowering maintainability of the operating system.

In a possible implementation of the first aspect, different virtual machine monitors communicate with each other by using a second-type interrupt instruction. When the operating system in the vehicle is in a running state, each interrupt instruction that needs to be processed by the operating system is a first-type interrupt instruction. The first-type interrupt instruction can be directly transferred to the operating system in the vehicle. The interrupt instruction that needs to be processed by the operating system may include: an interrupt instruction generated by the hardware device in the vehicle, an interrupt instruction generated by software in the operating system, an interrupt instruction generated by another operating system in the vehicle, another interrupt instruction that needs to be processed by the operating system, or the like. For example, on a platform of an ARM architecture, the second-type interrupt instruction may be specifically represented as an interrupt instruction in a fast interrupt request (fast interrupt request, FIQ) mode, and the first-type interrupt instruction may be specifically represented as an interrupt instruction in an interrupt request (interrupt request, IRQ) mode. The FIQ-mode interrupt instruction may be applied to a secure world, and the IRQ-mode interrupt instruction may be applied to a non-secure world.

In this implementation, different virtual machine monitors communicate with each other by using the second-type interrupt instruction, and the first-type interrupt instruction is directly transferred to the operating system in the vehicle, so that the virtual machine monitor no longer needs to process the first-type interrupt instruction. When the operating system in the vehicle is in the running state, a large quantity of first-type interrupt instructions need to be processed. Therefore, in the foregoing manner, computer resources consumed when the virtual machine monitor processes the first-type interrupt instruction can be avoided, and communication between different virtual machine monitors can be implemented. Further, communication between the virtual machine monitors is implemented with help of a capability of firmware of a processor, which has little impact on the operating system on the virtual machine monitor.

In a possible implementation of the first aspect, that the first virtual machine monitor sends target indication information to the second virtual machine monitor includes: The first virtual machine monitor may write the target indication information into a predetermined storage address, and invoke an interface of a first processor corresponding to the first virtual machine monitor, to trigger the first processor to send the FIQ-mode interrupt instruction to a second processor corresponding to the second virtual machine monitor. After receiving the FIQ-mode interrupt instruction sent by the first processor, the second processor may obtain identification information carried in the FIQ-mode interrupt instruction. The identification information is used by the second processor to determine, based on the identification information, an operation that needs to be performed. In response to the received FIQ-mode interrupt instruction, the second processor triggers the second virtual machine monitor to read the target indication information from the predetermined storage address, parse the obtained target indication information, and determine content of the target access request.

In a possible implementation of the first aspect, a safety level corresponding to the second virtual machine monitor is higher than a safety level corresponding to the first virtual machine monitor. That is, a safety level of a hardware resource managed by the second virtual machine monitor may be higher than a safety level of a hardware resource managed by the first virtual machine monitor. In this implementation, when both the first virtual machine monitor and the second virtual machine monitor have access requirements for a hardware device, the second virtual machine monitor of a higher safety level actually manages the hardware device. That is, when at least two virtual machine monitors may both have access requirements for a hardware device, a virtual machine monitor of the highest safety level in the at least two virtual machine monitors actually manages the hardware device, which helps ensure security of a processing process of the data in the vehicle, and further helps improve safety of the vehicle.

In a possible implementation of the first aspect, the method further includes: If the access address of the target access request is within the management range of the first virtual machine monitor, in a first case, the first virtual machine monitor performs, by using a virtual input/output VirtIO processing technology, the access operation that the target access request points to, to implement sharing of the hardware device between different operating systems; or in a second case, the first virtual machine monitor performs, by using a built-in driver, the access operation that the target access request points to.

In this implementation, compatibility with the general VirtIO technology is achieved, and maintainability of this solution is improved. In addition, the access operation may be performed by using the built-in driver of the virtual machine monitor based on an actual case. This may reduce time consumed for performing the access operation. That is, this helps improve processing efficiency of the target access request.

In a possible implementation of the first aspect, because the VirtIO technology can support sharing of the hardware device between a front-end operating system and a back-end operating system that run on the first virtual machine monitor (that is, sharing of access permission for the same hardware device), a segment of shared memory may exist between the front-end operating system and the back-end operating system that run on the first virtual machine monitor. That is, the back-end operating system on the first virtual machine monitor has a segment of memory that is of the front-end operating system and that allows access, so that the back-end operating system on the first virtual machine monitor implements a read/write operation on the foregoing segment of memory. A meaning of "the segment of shared memory" includes: The front-end operating system notifies the back-end operating system of data that needs to be written into the shared hardware device, and the back-end operating system notifies the front-end operating system of data that is read from the shared hardware device.

However, a first thread and a second thread run on the back-end operating system running on the first virtual machine monitor. The first thread is a thread used to perform the access operation on the hardware device shared between the front-end operating system and the back-end operating system. The second thread and the first thread are different threads. That is, the second thread is not a thread used to manage the shared hardware device. In this case, the first virtual machine monitor may configure different stage2 page tables for the first thread and the second thread that run in the back-end operating system. A memory address of the front-end operating system exists in a stage2 page table corresponding to the first thread. That is, an address of "the segment of shared memory" exists in the stage2 page table corresponding to the first thread. The memory address of the front-end operating system does not exist in a stage2 page table corresponding to the second thread.

In this implementation, when performing the access operation, each thread needs to implement conversion from an intermediate physical address to a physical address by using the stage2 page table, and then perform a read/write operation on the converted physical address. The memory address of the front-end operating system does not exist in the stage2 page table corresponding to the second thread. Therefore, even if the second thread is allocated an incorrect intermediate physical address, the intermediate physical address cannot be converted to the memory address of the front-end operating system based on the stage2 page table corresponding to the second thread. This further reduces a probability that the second thread in the back-end operating system accesses the memory of the front-end operating system, and helps improve security of data stored in the front-end operating system.

In a possible implementation of the first aspect, the virtual machine monitor deployed in the vehicle is embedded. In this implementation, a plurality of embedded virtual machine monitors are deployed in the vehicle, and an amount of code in each virtual machine monitor is small. In this case, maintainability and security of each virtual machine monitor are high.

In a possible implementation of the first aspect, the hardware devices of the N safety levels are deployed at a hardware layer of the vehicle. One virtual machine monitor runs on a hardware device of each safety level, and different virtual machine monitors run on hardware devices of different safety levels.

In this implementation, it is specified that the hardware devices of the N safety levels are deployed at the hardware layer, and different virtual machine monitors run on hardware devices of different safety levels. That is, an architecture of the vehicle to which the virtual machine monitor belongs is further specified, which helps improve accuracy in an execution process of this solution, to improve safety of this solution.

According to a second aspect, an embodiment of this application provides a virtual machine monitor, so that a computer technology can be applied to the field of vehicles. The virtual machine monitor is configured to process data in a vehicle. The vehicle includes hardware devices of N safety levels and N virtual machine monitors corresponding to the hardware devices of the N safety levels. The virtual machine monitor is deployed at a virtualization layer. N is an integer greater than or equal to 2. At least one operating system runs on each virtual machine monitor. The N virtual machine monitors include a first virtual machine monitor and a second virtual machine monitor. The first virtual machine monitor includes: an obtaining unit, configured to obtain a target access request, where the target access request is an access request initiated by an operating system in the vehicle for a hardware device in the vehicle; and a sending unit, configured to: if an access address of the target access request falls outside a management range of the first virtual machine monitor, send, by the first virtual machine monitor, indication information to the second virtual machine monitor, where the indication information is used to request the second virtual machine monitor to perform an access operation that the target access request points to.

In the second aspect of this application, the first virtual machine monitor may be further configured to perform the steps performed by the first virtual machine monitor in the first aspect and the possible implementations of the first aspect. For specific implementations of the steps, meanings of nouns, and beneficial effects brought in the possible implementations of the second aspect, refer to the first aspect. Details are not described herein again.

According to a third aspect, an embodiment of this application provides a computer program product. The computer program product includes a program. When the program is run on a computer, the computer is enabled to perform the processing method for data in a vehicle according to the first aspect.

According to a fourth aspect, an embodiment of this application provides a computer-readable storage medium. The computer-readable storage medium stores a computer program. When the computer program is run on a computer, the computer is enabled to perform the processing method for data in a vehicle according to the first aspect.

According to a fifth aspect, an embodiment of this application provides a processing system for data. The processing system for data in a vehicle is applied to the vehicle. The processing system for data in a vehicle includes N virtual machine monitors. The N virtual machine monitors correspond to hardware devices of N safety levels in the vehicle. The virtual machine monitor is deployed at a virtualization layer. N is an integer greater than or equal to 2. There is a first virtual machine monitor in the N virtual machine monitors. The first virtual machine monitor performs the steps performed by the first virtual machine monitor in the processing method for data in a vehicle according to the first aspect.

According to a sixth aspect, an embodiment of this application provides a vehicle. The vehicle includes hardware devices of N safety levels and N virtual machine monitors corresponding to the hardware devices of the N safety levels. The virtual machine monitor is deployed at a virtualization layer. N is an integer greater than or equal to 2. There is a first virtual machine monitor in the N virtual machine monitors. The first virtual machine monitor performs the steps performed by the first virtual machine monitor in the processing method for data in a vehicle according to the first aspect.

According to a seventh aspect, this application provides a chip system. The chip system includes a processor configured to support a virtual machine monitor or communication device in implementing functions in the foregoing aspects, for example, sending or processing data and/or information in the foregoing method. In a possible design, the chip system further includes a memory. The memory is configured to store program instructions and data that are necessary for the virtual machine monitor or communication device. The chip system may include a chip, or may include a chip and another discrete component.

### BRIEF DESCRIPTION OF DRAWINGS

FIG. 1a is an architectural diagram of a vehicle in a conventional technology according to an embodiment of this application;
FIG. 1b is an architectural diagram of a vehicle in a processing method for data in a vehicle according to an embodiment of this application;
FIG. 2 is a schematic flowchart of a processing method for data in a vehicle according to an embodiment of this application;
FIG. 3A to FIG. 3C are a schematic flowchart of a processing method for data in a vehicle according to an embodiment of this application;
FIG. 4 is a schematic flowchart in which different virtual machine monitors communicate with each other by using a second-type interrupt instruction in a processing method for data in a vehicle according to an embodiment of this application;
FIG. 5 is a diagram of comparison between a first-type terminal instruction and a second-type terminal instruction in a processing method for data in a vehicle according to an embodiment of this application;
FIG. 6 is a schematic flowchart of a processing method for data in a vehicle according to an embodiment of this application;
FIG. 7 is a schematic flowchart of a processing method for data in a vehicle according to an embodiment of this application;
FIG. 8 is a diagram of a structure of a first virtual machine monitor according to an embodiment of this application;
FIG. 9 is a diagram of a structure of a first virtual machine monitor according to an embodiment of this application; and
FIG. 10 is a diagram of a structure of a vehicle according to an embodiment of this application.

### DESCRIPTION OF EMBODIMENTS

In the specification, claims, and the accompanying drawings of this application, the terms "first", "second", and the like are intended to distinguish between similar objects but do not necessarily indicate a specific order or sequence. It should be understood that the terms used in this way may be interchanged in appropriate cases, and this is merely a manner of distinguishing between objects with a same attribute for description in embodiments of this application. In addition, the terms "include", "have", and any other variants thereof mean to cover the non-exclusive inclusion, so that a process, method, system, product, or device that includes a series of units is not necessarily limited to those units, but may include other units not expressly listed or inherent to such a process, method, product, or device.

The following describes embodiments of this application with reference to the accompanying drawings. A person of ordinary skill in the art may learn that, with technology development and emergence of a new scenario, the technical solutions provided in embodiments of this application are also applicable to a similar technical problem.

Embodiments of this application may be applied to the field of vehicles. The vehicles may be specifically represented by a car, a truck, a motorcycle, a public vehicle, a boat, an airplane, a helicopter, a lawn mower, a recreational vehicle, a playground vehicle, a construction device, a trolley, a golf cart, a train, and the like. This is not specially limited in embodiments of this application.

To meet a safety requirement in ISO 26262, in the solution provided in embodiments of this application, isolation between different safety levels is implemented on both hardware and software, and no intrusive modification to an operating system is required. Before a processing method for data in a vehicle provided in embodiments of this application is described, an architecture of the vehicle used in embodiments of this application is first described.

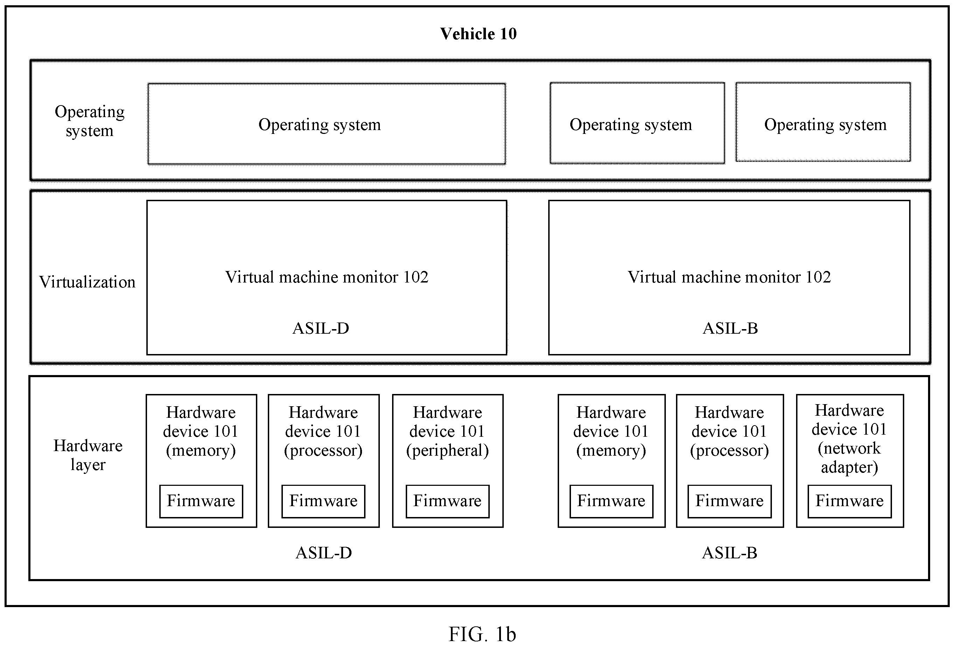

FIG. 1b is an architectural diagram of a vehicle in a processing method for data in a vehicle according to an embodiment of this application. In FIG. 1b, the vehicle 10 includes hardware devices 101 of N safety levels, N virtual machine monitors (virtual machine monitors, VMMs) 102 corresponding to the hardware devices of the N safety levels, and an operating system 103 running on each virtual machine monitor 102. In FIG. 1b, for example, a value of N is 2, and the two safety levels are ASIL-B and ASIL-D. It should be noted that a quantity of the safety levels of the hardware devices included in one vehicle 10 and specifically used safety levels need to be determined with reference to an actual application scenario. This is not limited herein.

The hardware device 101 is deployed at a hardware layer of the vehicle 10. One hardware device 101 may include an integrated circuit and firmware (firmware) integrated with the integrated circuit. The firmware is also referred to as "fixed software". The firmware is program code written inside the integrated circuit of the hardware device 101, and is computer software that is stored in a non-volatile manner. The firmware is software that undertakes the most fundamental and lowest-level work of the hardware device 101. For example, the hardware device 101 may be specifically represented as a central processing unit (central processing unit, CPU), a memory chip, a network adapter, a hard disk, or another hardware device, which is not exhaustive herein.

The virtual machine monitor 102 is deployed at a virtualization layer of the vehicle 10. The virtual machine monitor 102 may also be referred to as a virtual machine management program. In FIG. 1b, for example, the virtual machine monitor 102 directly runs at the hardware layer. That is, an embedded virtual machine monitor 102 is used in the vehicle 10 shown in FIG. 1b. As shown in FIG. 1b, one virtual machine monitor 102 runs on the hardware device 101 of each safety level (that is, FIG. 1b), and different virtual machine monitors run on hardware devices 101 of different safety levels. Each virtual machine monitor 102 is configured to manage a hardware device 101 of one ASIL level. That is, each virtual machine monitor 102 is configured to manage an access operation on a hardware device 101 of one ASIL level.

At least one operating system (operating system, OS) may run on each virtual machine monitor 102. The at least one operating system may include a back-end operating system. Optionally, the at least one operating system may alternatively include a front-end operating system and a back-end operating system. Further, a driver in the back-end operating system can write data into the hardware device 101, or read data from the hardware device 101. The front-end operating system needs to use the back-end operating system to complete a read/write operation on the hardware device 101.

Each virtual machine monitor 102 is responsible for managing the operating system running on the virtual machine monitor 102. Program code corresponding to different virtual machine monitors 102 may be different. For example, on a virtualization platform of an advanced reduced instruction set computer machine (advanced RISC machine, ARM) architecture, the virtual machine monitor 102 may manage the operating system by using a page table (stage) mechanism. That is, a stage1 page table is configured in the operating system running on the virtual machine monitor 102. The stage1 page table is configured to perform mapping from a virtual address (virtual address, VA) to an intermediate physical address (IPA). A stage2 page table is configured to perform mapping from an IPA to a physical address (physical address, PA). The operating system running on the virtual machine monitor 102 is unaware of the stage2 page table. Each virtual machine monitor 102 may configure a stage2 page table corresponding to the operating system running on the virtual machine monitor 102, to ensure that the operating system running on the virtual machine monitor 102 can access only a hardware device 101 allocated by the virtual machine monitor 102 to the operating system.

In this embodiment of this application, a plurality of embedded virtual machine monitors 102 are deployed in the vehicle 10, and an amount of code in each virtual machine monitor 102 is small. In this case, maintainability and security of each virtual machine monitor 102 are high.

It should be noted that the example in FIG. 1b is merely for ease of understanding the architecture of the vehicle 10 provided in embodiments of this application. For example, in another embodiment, a host operating system (host OS) may run between the hardware device 101 and the virtual machine monitor 102. That is, each virtual machine monitor 102 may not be embedded, the host operating system directly runs on the hardware device 101 of the N safety levels, and the N virtual machine monitors 102 run in the host operating system. The example in FIG. 1b is not used to limit the architecture of the vehicle 10 in embodiments of this application. It only needs to be ensured that the virtual machine monitor 102 is deployed at the virtualization layer.

In this embodiment of this application, it is specified that the hardware devices of the N safety levels are deployed at the hardware layer, and different virtual machine monitors run on hardware devices of different safety levels. That is, the architecture of the vehicle to which the virtual machine monitor belongs is further specified, which helps improve accuracy in an execution process of this solution, to improve safety of this solution.

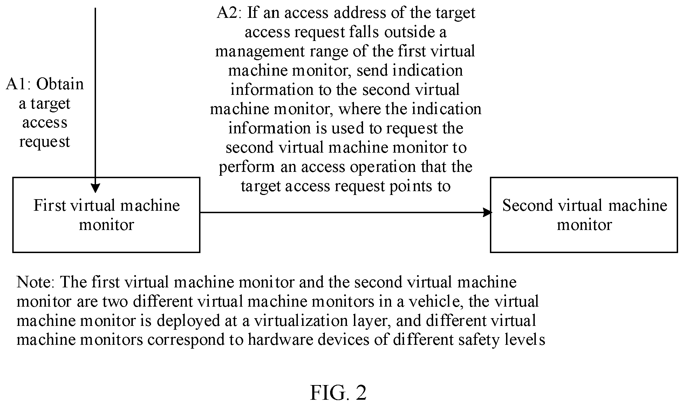

On the architecture of the vehicle 10 shown in FIG. 1b, a processing method for data in a vehicle is provided based on an embodiment of this application. FIG. 2 is a schematic flowchart of a processing method for data in a vehicle according to an embodiment of this application. A1: A first virtual machine monitor obtains a target access request, where the target access request is an access request initiated by an operating system in the vehicle for a hardware device in the vehicle. A2: If an access address of the target access request falls outside a management range of the first virtual machine monitor, the first virtual machine monitor sends indication information to a second virtual machine monitor, where the indication information is used to request the second virtual machine monitor to perform an access operation that the target access request points to. The first virtual machine monitor and the second virtual machine monitor are two different virtual machine monitors 102 in the vehicle 10 shown in FIG. 1b, and the virtual machine monitor 102 is deployed at a virtualization layer.

In this embodiment of this application, isolation between different safety levels is implemented on both hardware and software. In addition, when determining that the access address of the target access request falls outside the management range, the first virtual machine monitor sends the indication information to the second virtual machine monitor. The indication information is used to request the second virtual machine monitor to perform the access operation that the target access request points to. The foregoing process is implemented by using the virtual machine monitor, and no intrusive modification to the operating system is required, to avoid a large amount of modification to code of the operating system, and avoid lowering maintainability of the operating system.

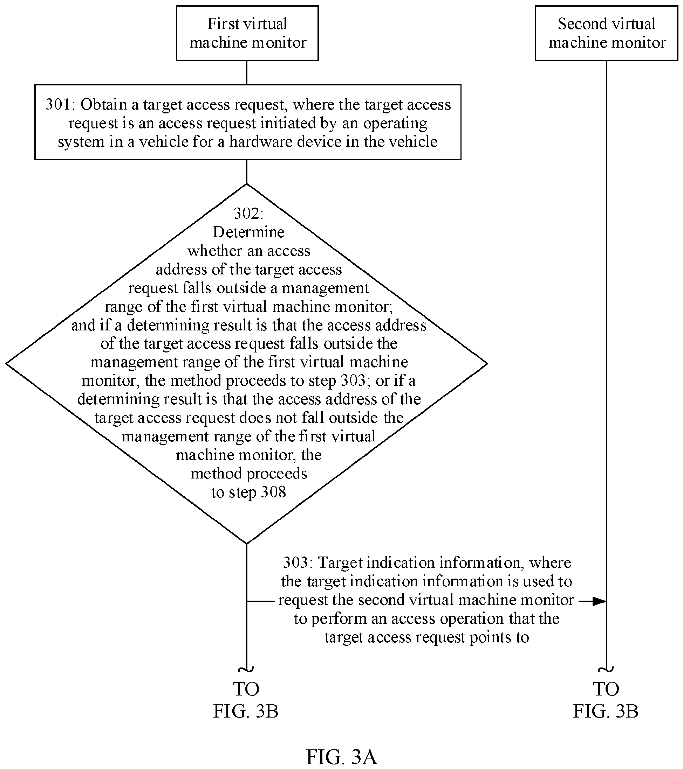

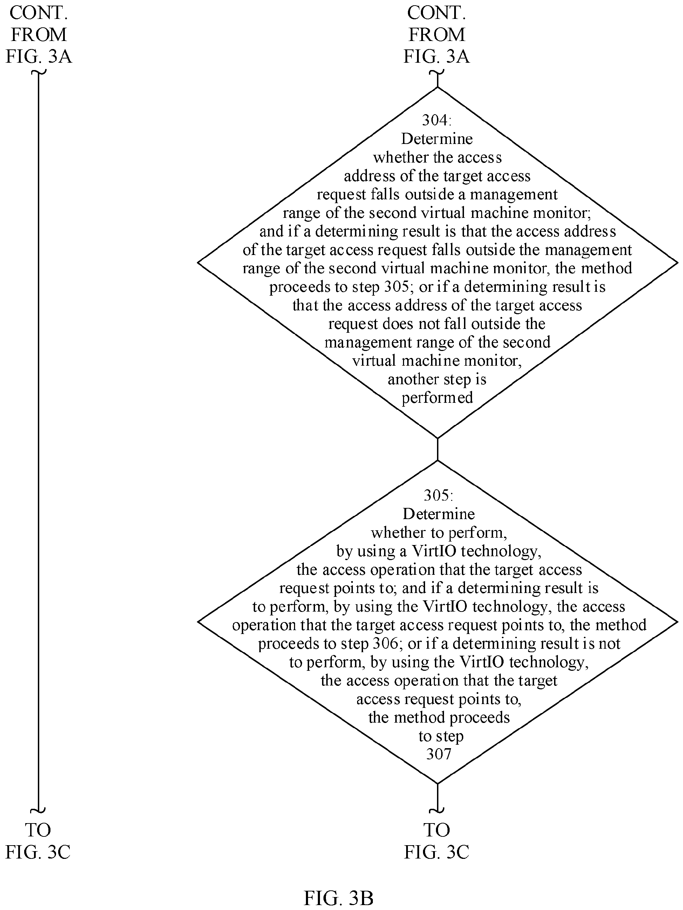

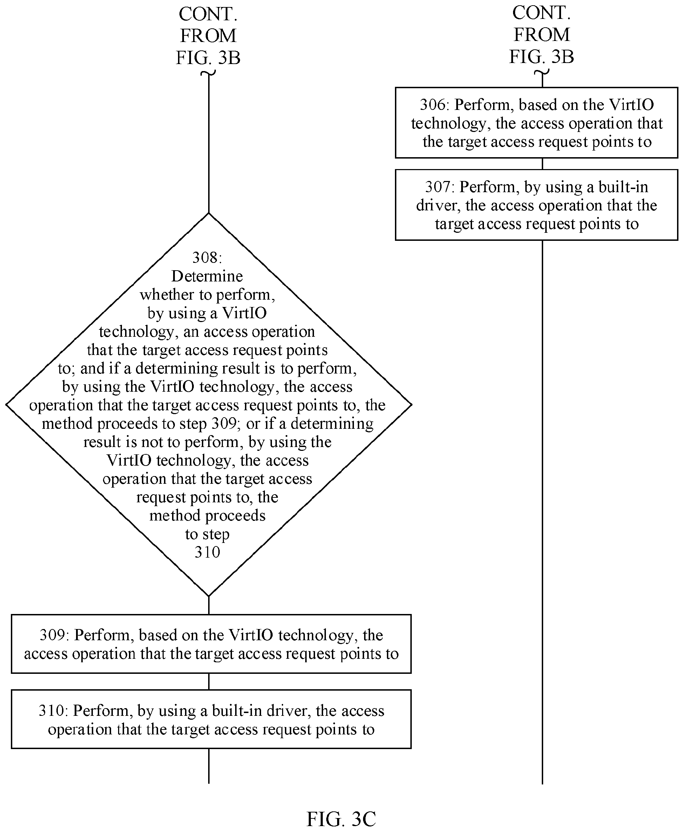

The following starts to describe in detail a specific implementation procedure of the processing method for data in a vehicle provided in this embodiment of this application. Specifically, refer to FIG. 3A to FIG. 3C. FIG. 3A to FIG. 3C are a schematic flowchart of a processing method for data in a vehicle according to an embodiment of this application. The processing method for data in a vehicle provided in this embodiment of this application may include the following steps.

301: A first virtual machine monitor obtains a target access request, where the target access request is an access request initiated by an operating system in the vehicle for a hardware device in the vehicle.

In this embodiment of this application, in a running process of the first virtual monitor, one or more target access requests may be obtained. The target access request is the access request initiated by the operating system in the vehicle for a hardware device in the vehicle. The target access request may be specifically represented as a read request for data in the hardware device in the vehicle, or writing data into the hardware device in the vehicle.

In one case, the target access request is initiated by a first operating system running on the first virtual machine monitor. Specifically, in a running process of the first operating system on the first virtual machine monitor, the first operating system may initiate a plurality of first access requests for the hardware device in the vehicle. In one case, the first virtual machine monitor may obtain each first access request. That is, each first access request is one target access request. In another case, the first virtual machine may obtain only an access request initiated by the first operating system for a specific hardware device in the vehicle. That is, only a request, among the plurality of first access requests, used to access the specific hardware device is determined as the target access request.

In another case, the target access request is initiated by an operating system running on another virtual machine monitor in the vehicle. The first virtual machine monitor may receive indication information sent by the another virtual machine monitor, and obtain the target access request based on the indication information. An information exchange manner between different virtual machine monitors is described in detail in subsequent steps. Details are not described herein again.

302: The first virtual machine monitor determines whether an access address of the target access request falls outside a management range of the first virtual machine monitor; and if a determining result is that the access address of the target access request falls outside the management range of the first virtual machine monitor, the method proceeds to step 303; or if a determining result is that the access address of the target access request does not fall outside the management range of the first virtual machine monitor, the method proceeds to step 308.

In this embodiment of this application, first indication information may be preconfigured on the first virtual machine monitor. The first indication information includes a range of a physical address managed by each virtual machine monitor in the vehicle. The range of the physical address managed by each virtual machine monitor depends on a range of a physical address of a hardware device that is of a safety level and that corresponds to the virtual machine monitor.

After obtaining the target access request, the first virtual machine monitor may obtain a target access address corresponding to the target access request. The target access address corresponding to the target access request is a physical address. The first virtual machine monitor may determine, based on the first indication information, whether the access address of the target access request falls outside the management range of the first virtual machine monitor. If a determining result is that the access address of the target access request falls outside the management range of the first virtual machine monitor, the first virtual machine monitor may further determine, based on the first indication information, which virtual machine monitor's management range the target access address belongs to (namely, a "second virtual machine monitor" in subsequent steps). Then, the method proceeds to step 303. If a determining result is that the access address of the target access request does not fall outside the management range of the first virtual machine monitor, the method proceeds to step 308.

303: The first virtual machine monitor sends target indication information to the second virtual machine monitor, where the target indication information is used to request the second virtual machine monitor to perform an access operation that the target access request points to.

In this embodiment of this application, the first virtual machine monitor sends the target indication information to the second virtual machine monitor. The target indication information is used to request the second virtual machine monitor to perform the access operation that the target access request points to.

Specifically, in an implementation, different virtual machine monitors communicate with each other by using a second-type interrupt instruction. When the operating system in the vehicle is in a running state, each interrupt instruction that needs to be processed by the operating system is a first-type interrupt instruction. The first-type interrupt instruction can be directly transferred to the operating system in the vehicle. The interrupt instruction that needs to be processed by the operating system may include: an interrupt instruction generated by the hardware device in the vehicle, an interrupt instruction generated by software in the operating system, an interrupt instruction generated by another operating system in the vehicle, another interrupt instruction that needs to be processed by the operating system, or the like, which is not exhaustive herein.

On a platform of an ARM architecture, the second-type interrupt instruction may be specifically represented as an interrupt instruction in a fast interrupt request (fast interrupt request, FIQ) mode, and the first-type interrupt instruction may be specifically represented as an interrupt instruction in an interrupt request (interrupt request, IRQ) mode. The FIQ-mode interrupt instruction may be applied to a secure world, and the IRQ-mode interrupt instruction may be applied to a non-secure world.

Optionally, a safety level corresponding to the second virtual machine monitor may be higher than a safety level corresponding to the first virtual machine monitor. That is, a safety level of a hardware resource managed by the second virtual machine monitor may be higher than a safety level of a hardware resource managed by the first virtual machine monitor. In this embodiment of this application, when both the first virtual machine monitor and the second virtual machine monitor have access requirements for a hardware device, the second virtual machine monitor of a higher safety level actually manages the hardware device. That is, when at least two virtual machine monitors may both have access requirements for a hardware device, a virtual machine monitor of the highest safety level in the at least two virtual machine monitors actually manages the hardware device, which helps ensure security of a processing process of the data in the vehicle, and further helps improve safety of the vehicle.

For a process in which two virtual machine monitors communicate with each other by using the second-type interrupt instruction, a FIQ-mode interrupt instruction is used as an example of the second-type interrupt instruction herein only. When the solution provided in this embodiment of this application is applied to another type of architecture platform, the first-type interrupt instruction and the second-type interrupt instruction may be alternatively specifically represented as interrupt instructions of another type. The example in this embodiment of this application is not intended to limit the first-type interrupt instruction and the second-type interrupt instruction.

More specifically, each virtual machine monitor in the vehicle may register a callback function with a corresponding processor in advance, and the processor provides an interface for the virtual machine monitor. When the first virtual machine monitor needs to send the target indication information to the second virtual machine monitor, the first virtual machine monitor may write the target indication information into a predetermined storage address, and invoke an interface of a first processor corresponding to the first virtual machine monitor, to trigger the first processor to send the FIQ-mode interrupt instruction to a second processor corresponding to the second virtual machine monitor.

After receiving the FIQ-mode interrupt instruction sent by the first processor, the second processor may obtain identification information carried in the FIQ-mode interrupt instruction. The identification information is used by the second processor to determine, based on the identification information, an operation that needs to be performed. In response to the received FIQ-mode interrupt instruction, the second processor triggers the second virtual machine monitor to execute the callback function. Specifically, a process in which the second virtual machine monitor executes the callback function includes: The second virtual machine monitor reads the target indication information from the predetermined storage address, parses the obtained target indication information, and determines content of the target access request. Through the foregoing steps, communication between the first virtual machine monitor and the second virtual machine monitor is implemented by using the FIQ-mode interrupt instruction.

Further, when the operating system on each virtual machine monitor (including the first virtual machine monitor) is in the running state, each virtual machine monitor (including the first virtual machine monitor) no longer captures the IRQ-mode interrupt instruction. Instead, the operating system on each virtual machine monitor directly receives and processes the IRQ-mode interrupt instruction.

Further, each virtual machine monitor captures a configuration behavior of the IRQ-mode interrupt instruction only when the operating system is in an initialization phase, to ensure that the operating system running on the virtual machine monitor can be configured with only an interrupt resource belonging to the operating system, and cannot process an interrupt resource of another operating system. That is, isolation between interrupt resources configured for different operating systems is implemented.

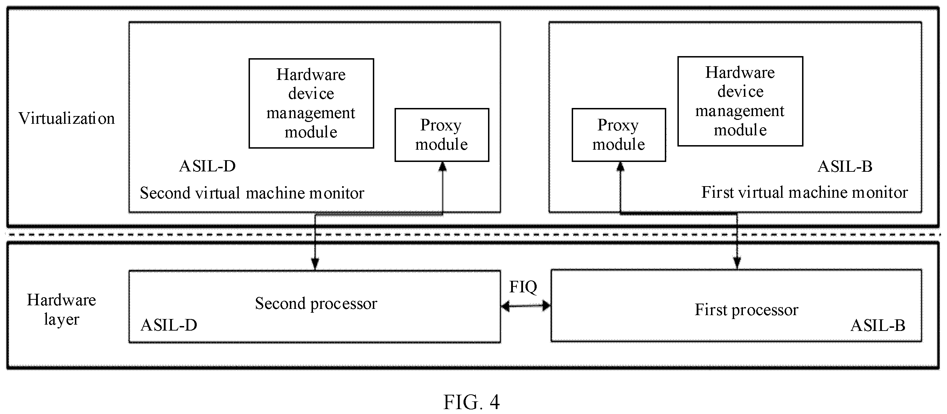

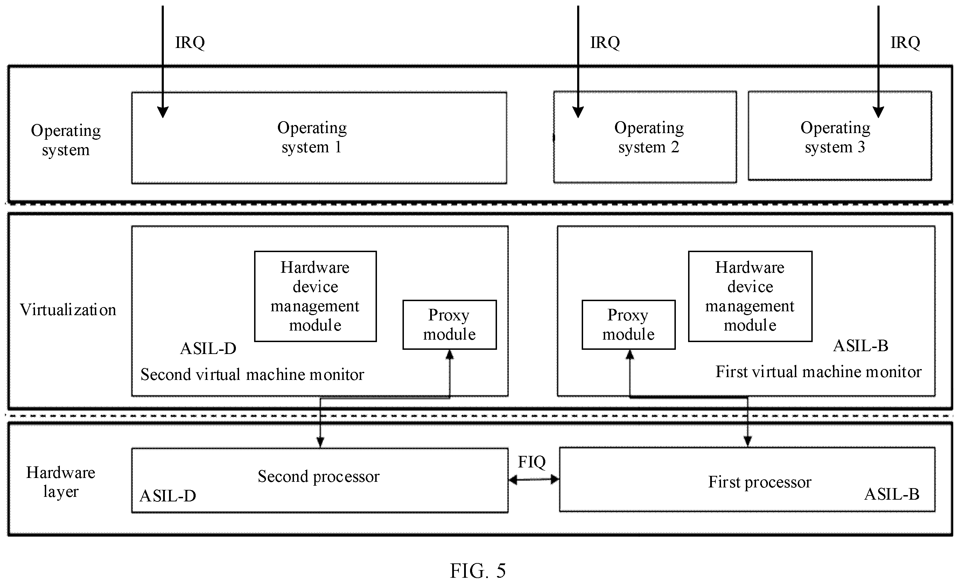

For more intuitive understanding of this solution, refer to FIG. 4 and FIG. 5. FIG. 4 is a schematic flowchart in which different virtual machine monitors communicate with each other by using a second-type interrupt instruction in a processing method for data in a vehicle according to an embodiment of this application. In FIG. 4, for example, embodiments of this application are applied to a hardware platform of the ARM architecture. As shown in FIG. 4, each virtual machine monitor may include a hardware device management module and a proxy module. The hardware device management module in the virtual machine monitor is configured to manage an access operation on the hardware device. The proxy module is configured to implement communication between different virtual machine monitors.

When the first virtual machine monitor needs to communicate with the second virtual machine monitor, a proxy module in the first virtual machine monitor may invoke the interface on firmware of the first processor, to trigger the first processor to send the FIQ-mode interrupt instruction to the second processor. After receiving and parsing the FIQ-mode interrupt instruction, the second processor triggers a proxy module in the second virtual machine monitor to execute the callback function, that is, triggers the proxy module in the second virtual machine monitor to read the target indication information from the predetermined storage address. It should be understood that the example in FIG. 4 is merely for ease of understanding this solution, and is not intended to limit this solution.

FIG. 5 is a diagram of comparison between a first-type terminal instruction and a second-type terminal instruction in a processing method for data in a vehicle according to an embodiment of this application. In FIG. 4, for example, embodiments of this application are applied to the hardware platform of the ARM architecture. For a communication manner between different virtual machine monitors in FIG. 5, refer to the foregoing description of FIG. 4 for understanding. Details are not described herein again. FIG. 5 further shows a plurality of operating systems (that is, an operating system 1, an operating system 2, and an operating system 3 in FIG. 5) running on the virtual machine monitor. As shown in the figure, each operating system can directly obtain the IRQ-mode interrupt instruction. It should be understood that the example in FIG. 5 is merely for ease of understanding this solution, and is not intended to limit this solution.

In this embodiment of this application, different virtual machine monitors communicate with each other by using the second-type interrupt instruction, and the first-type interrupt instruction is directly transferred to the operating system in the vehicle, so that the virtual machine monitor no longer needs to process the first-type interrupt instruction. When the operating system in the vehicle is in the running state, a large quantity of first-type interrupt instructions need to be processed. Therefore, in the foregoing manner, computer resources consumed when the virtual machine monitor processes the first-type interrupt instruction can be avoided, and communication between different virtual machine monitors can be implemented. Further, communication between the virtual machine monitors is implemented with help of a capability of firmware of the processor, which has little impact on the operating system on the virtual machine monitor.

In another implementation, different virtual machine monitors may communicate with each other by using the first-type interrupt instruction. When the operating system on each virtual machine monitor (including the first virtual machine monitor) is in the running state, each virtual machine monitor (including the first virtual machine monitor) captures all IRQ-mode interrupt instructions, processes the IRQ-mode interrupt instruction, and then injects the IRQ-mode interrupt instruction to the operating system running on the virtual machine monitor.

304: The second virtual machine monitor determines whether the access address of the target access request falls outside a management range of the second virtual machine monitor; and if a determining result is that the access address of the target access request falls outside the management range of the second virtual machine monitor, the method proceeds to step 305; or if a determining result is that the access address of the target access request does not fall outside the management range of the second virtual machine monitor, another step is performed.

In this embodiment of this application, after obtaining the target access request, the second virtual machine monitor determines whether the access address of the target access request falls outside the management range of the second virtual machine monitor. If the determining result is that the access address of the target access request falls outside the management range of the second virtual machine monitor, the method proceeds to step 305. If the determining result is that the access address of the target access request does not fall outside the management range of the second virtual machine monitor, the second virtual machine monitor determines, based on the access address of the target access request, a virtual machine monitor that can process the target access request, to forward the target access request to the determined virtual machine monitor. For a specific implementation of step 304, refer to the description in step 302. Details are not described herein again.

305: The second virtual machine monitor determines whether to perform, by using a VirtIO technology, the access operation that the target access request points to; and if a determining result is to perform, by using the VirtIO technology, the access operation that the target access request points to, the method proceeds to step 306; or if a determining result is not to perform, by using the VirtIO technology, the access operation that the target access request points to, the method proceeds to step 307.

In some embodiments of this application, second indication information may be configured on the second virtual machine monitor. The second indication information indicates physical addresses that are among physical addresses managed by the second virtual machine monitor and that need to be accessed by using the VirtIO technology, and physical addresses that may be directly accessed by using a built-in driver.

After determining that the access address of the target access request does not fall outside the management range of the second virtual machine monitor, the second virtual machine monitor may determine, based on the access address of the target access request and the second indication information, whether to perform, by using the VirtIO technology, the access operation that the target access request points to. If a determining result is to perform, by using the VirtIO technology, the access operation that the target access request points to, the method proceeds to step 306. If a determining result is not to perform, by using the VirtIO technology, the access operation that the target access request points to, the method proceeds to step 307.

306: The second virtual machine monitor performs, based on the VirtIO technology, the access operation that the target access request points to.

In some embodiments of this application, the second virtual machine monitor may be compatible with the virtual input/output (Virtual I/O, VirtIO) technology. That is, the second virtual machine monitor can use the virtual I/O technology to perform the access operation that the target access request points to, so as to implement sharing of the hardware device between different operating systems. In this case, both a back-end operating system and a front-end operating system may run on the second virtual machine monitor. For concepts of the back-end operating system and the front-end operating system, refer to the foregoing descriptions. Details are not described herein again.

As an example, for some complex hardware devices (for example, a network adapter), workload of performing a read/write operation on the network adapter by using a driver of the network adapter is heavy. In this case, the VirtIO technology is usually used to implement sharing of the network adapter between different operating systems.

Specifically, the second virtual machine monitor may determine, based on the access address of the target access request, a target back-end operating system that can perform the access operation that the target access request points to, and send the target access request to the target back-end operating system. A plurality of threads may run in the target back-end operating system. The plurality of threads include a first thread used to maintain a hardware device that the target access request points to. The first thread in the target back-end operating system performs, by using a driver, the access operation that the target access request points to. That is, the first thread in the target back-end operating system writes data into the hardware device by using the driver, or the first thread in the target back-end operating system reads data from the hardware device by using the driver.

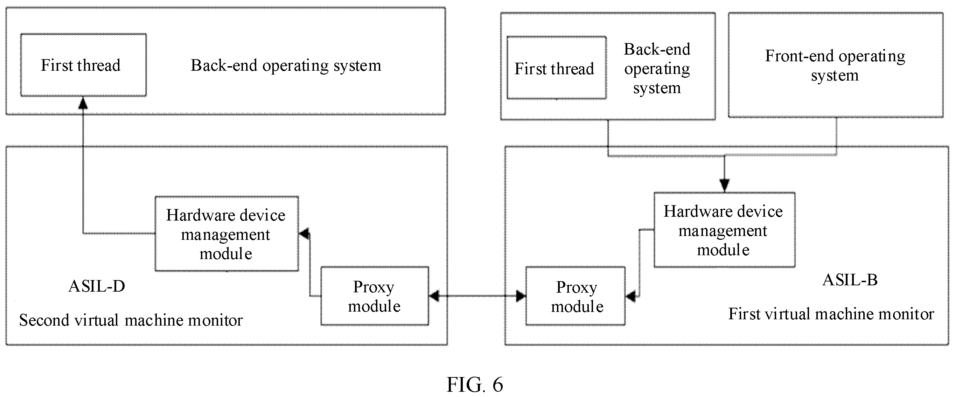

For more intuitive understanding of this solution, refer to FIG. 6. FIG. 6 is a schematic flowchart of a processing method for data in a vehicle according to an embodiment of this application. In FIG. 6, virtual machine monitors including two safety levels, which are ASIL-B and ASIL-D, are used as an example. As shown in the figure, back-end operating systems run on both the first virtual machine monitor and the second virtual machine monitor. A first thread runs on each back-end operating system. The first thread is a thread that directly manages the shared hardware device.

A hardware device management module in the first virtual machine monitor may obtain target access requests initiated by operating systems (that is, a front-end operating system and the back-end operating system that run on the first virtual machine monitor) running on the first virtual machine monitor (corresponding to the foregoing step 301). When the hardware device management module in the first virtual machine monitor determines that an access address of the target access request does not belong to management access of the first virtual machine monitor, the proxy module in the first virtual machine monitor sends indication information to the proxy module in the second virtual machine monitor. The indication information is used to request the second virtual machine monitor to perform an access operation that the target access request points to (corresponding to the foregoing steps 302 and 303). For a communication manner between the proxy module in the first virtual machine monitor and the proxy module in the second virtual machine monitor, refer to the foregoing description in FIG. 4. Details are not described herein again.

After the proxy module in the second virtual machine monitor obtains the indication information, the second virtual machine monitor parses the indication information, and determines, from the back-end operating system running on the second virtual machine monitor, a first thread that can execute the target access request, to perform the operation of the target access request by using the first thread (corresponding to the foregoing steps 304 to 306). It should be understood that the example in FIG. 6 is merely for ease of understanding this solution, and is not intended to limit this solution.

Further, because the VirtIO technology can also support sharing of a same hardware device between the front-end operating system and the back-end operating system that run on the second virtual machine monitor (that is, sharing of access permission for the same hardware device), and the back-end operating system actually directly performs the access operation on the hardware device, a segment of shared memory may exist between the front-end operating system and the back-end operating system that run on the second virtual machine monitor. That is, the back-end operating system on the second virtual machine monitor has a segment of memory that is of the front-end operating system and that allows access, so that the back-end operating system on the second virtual machine monitor implements a read/write operation on the foregoing segment of memory. A meaning of "the segment of shared memory" includes: The front-end operating system notifies the back-end operating system of data that needs to be written into the shared hardware device, and the back-end operating system notifies the front-end operating system of data that is read from the shared hardware device.

However, in addition to the first thread, a large quantity of second threads also run in the back-end operating system running on the second virtual machine monitor. The first thread is a thread used to perform the access operation on the hardware device shared between the front-end operating system and the back-end operating system. The second thread and the first thread are different threads. That is, the second thread is not a thread used to manage the shared hardware device. In this case, a risk that the second thread in the back-end operating system accesses "the segment of shared memory" exists.

The second virtual machine monitor may implement secure isolation between the second thread in the back-end operating system and the "segment of shared memory" by using a page table (stage) mechanism. Still further, the second virtual machine monitor may configure different stage2 page tables for the first thread and the second thread that run in the back-end operating system. A memory address of the front-end operating system exists in a stage2 page table corresponding to the first thread. That is, an address of "the segment of shared memory" exists in the stage2 page table corresponding to the first thread. It should be noted that the address, of the "segment of shared memory", existing in the stage2 page table may be a physical address (PA) of the "segment of shared memory". The memory address of the front-end operating system does not exist in a stage2 page table corresponding to the second thread. That is, the address of "the segment of shared memory" does not exist in the stage2 page table corresponding to the second thread.

Specifically, the second virtual machine monitor may first configure the stage2 page table for the second thread in the back-end operating system. The memory address of the front-end operating system does not exist in the stage2 page table corresponding to the second thread. The second virtual machine monitor may copy the stage2 page table corresponding to the second thread, and generate, based on the copied stage2 page table corresponding to the second thread, the stage2 page table corresponding to the first thread in the back-end operating system. The memory address of the front-end operating system exists in the stage2 page table corresponding to the first thread. Some entries in the two stage2 page tables obtained in the foregoing manner may be reused, which helps reduce storage resources occupied by the two stage2 page tables.

In a process in which the plurality of threads in the back-end operating system perform the access operation on the hardware device in the vehicle, the back-end operating system needs to implement conversion from a virtual address to an intermediate address based on a stage1 page table, and a processor allocated by the second virtual machine monitor implements conversion from the intermediate physical address to a physical address based on the stage2 page table.

In this case, the processor allocated by the second virtual machine monitor determines whether a current thread is a thread used to manage the shared hardware device (that is, determines whether the current thread is the first thread). If a determining result is that the current thread is the thread used to manage the shared hardware device, an operation of conversion from the intermediate physical address to the physical address is performed based on the stage2 page table corresponding to the first thread. If a determining result is that the current thread is not the thread used to manage the shared hardware device, an operation of conversion from the intermediate physical address to the physical address is performed based on the stage2 page table corresponding to the second thread.

In this embodiment of this application, when performing the access operation, each thread needs to implement conversion from the intermediate physical address to the physical address by using the stage2 page table, and then perform a read/write operation on the converted physical address. The memory address of the front-end operating system does not exist in the stage2 page table corresponding to the second thread. Therefore, even if the second thread is allocated an incorrect intermediate physical address, the intermediate physical address cannot be converted to the memory address of the front-end operating system based on the stage2 page table corresponding to the second thread. This further reduces a probability that the second thread in the back-end operating system accesses the memory of the front-end operating system, and helps improve security of data stored in the front-end operating system.

307: The second virtual machine monitor performs, by using the built-in driver, the access operation that the target access request points to.

In some embodiments of this application, at least one driver may alternatively be built in the second virtual machine monitor. In this case, when determining the access address of the target access request, the second virtual machine monitor determines not to perform, by using the VirtIO technology, the access operation that the target access request points to, and may directly perform, by using the built-in driver, the access operation that the target access request points to, that is, perform a read/write operation on the access address of the target access request by using the built-in driver.

For example, if the hardware device that the target access request points to is a simple device, for example, an interrupt controller or a serial port controller, a driver of the foregoing device may be built in the second virtual machine monitor, to perform the read/write operation on the access address of the target access request by using the driver of the second virtual machine monitor.

In this embodiment of this application, if the access address of the target access request is within the management range of the current virtual machine monitor, in one case, the access operation that the target access request points to may be performed by using the VirtIO technology; or in another case, the access operation that the target access request points to may be performed by using the built-in driver. Compatibility with the general VirtIO technology is achieved, and maintainability of this solution is improved. In addition, the access operation may be performed by using the built-in driver of the virtual machine monitor based on an actual case. This may reduce time consumed for performing the access operation. That is, this helps improve processing efficiency of the target access request.

It should be noted that step 305 is an optional step. If step 305 is not performed, the second virtual machine monitor may perform, by using only the VirtIO technology, access operations that all target access requests point to, or the second virtual machine monitor may perform, by using only the built-in driver, access operations that all target access requests point to.

308: The first virtual machine monitor determines whether to perform, by using a VirtIO technology, an access operation that the target access request points to; and if a determining result is to perform, by using the VirtIO technology, the access operation that the target access request points to, the method proceeds to step 306; or if a determining result is not to perform, by using the VirtIO technology, the access operation that the target access request points to, the method proceeds to step 307.

309: The first virtual machine monitor performs, based on the VirtIO technology, the access operation that the target access request points to.

310: The first virtual machine monitor performs, by using a built-in driver, the access operation that the target access request points to.

In this embodiment of this application, specific implementations of steps 308 to 310 are similar to specific implementations of steps 305 to 307. For the specific implementations of steps 308 to 310, refer to the foregoing descriptions of the specific implementations of steps 305 to 307. A difference lies in that the second virtual machine monitor in steps 308 to 310 is replaced with the first virtual machine monitor in steps 308 to 310. Implementation details are not described herein again.

Correspondingly, step 308 is an optional step. If step 308 is not performed, the first virtual machine monitor may perform, by using only the VirtIO technology, access operations that all target access requests point to, or the first virtual machine monitor may perform, by using only the built-in driver, access operations that all target access requests point to.

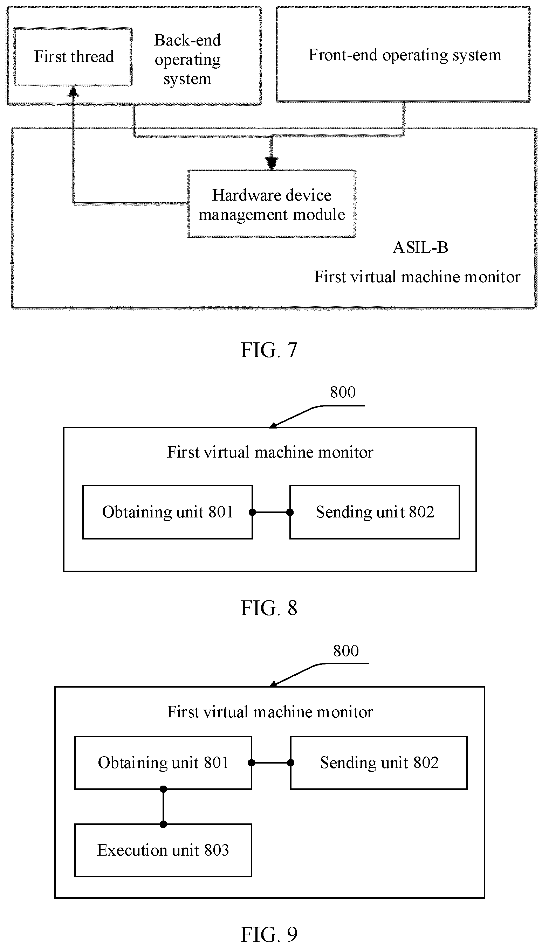

For more intuitive understanding of this solution, refer to FIG. 7. FIG. 7 is a schematic flowchart of a processing method for data in a vehicle according to an embodiment of this application. In FIG. 7, for example, a safety level of a hardware device managed by the first virtual machine monitor is ASIL-B. As shown in the figure, a back-end operating system runs on the first virtual machine monitor. A first thread runs in the back-end operating system. The first thread is a thread that directly manages a shared hardware device.

A hardware device management module in the first virtual machine monitor may obtain target access requests initiated by operating systems (that is, a front-end operating system and the back-end operating system that run on the first virtual machine monitor) running on the first virtual machine monitor (corresponding to the foregoing step 301). When the hardware device management module in the first virtual machine monitor determines that the access address of the target access request belongs to management access of the first virtual machine monitor, a proxy module in the first virtual machine monitor determines, from the back-end operating system running on the first virtual machine monitor, a first thread that can execute the target access request, to perform the operation of the target access request by using the first thread (corresponding to the foregoing steps 302, 308, and 309). It should be understood that the example in FIG. 7 is merely for ease of understanding this solution, and is not intended to limit this solution.

In this implementation, hardware devices of N safety levels and N virtual machine monitors corresponding to the hardware devices of the N safety levels are configured in the vehicle, and at least one operating system runs on each virtual machine monitor, so that isolation between different safety levels is implemented on both hardware and software. In addition, after the operating system in the vehicle initiates the access request for the hardware device in the vehicle, when determining that the access address of the target access request falls outside the management range, the first virtual machine monitor sends indication information to the second virtual machine monitor. The indication information is used to request the second virtual machine monitor to perform the access operation that the target access request points to. The foregoing process is implemented by using the virtual machine monitor, and no intrusive modification to the operating system is required, to avoid a large amount of modification to code of the operating system, and avoid lowering maintainability of the operating system.

Based on the embodiments corresponding to FIG. 1b to FIG. 7, to better implement the foregoing solutions in embodiments of this application, the following further provides related devices configured to implement the foregoing solutions. Specifically, refer to FIG. 8. FIG. 8 is a diagram of a structure of a first virtual machine monitor according to an embodiment of this application. The virtual machine monitor is configured to process data in a vehicle. The vehicle includes hardware devices of N safety levels and N virtual machine monitors corresponding to the hardware devices of the N safety levels. The virtual machine monitor is deployed at a virtualization layer. N is an integer greater than or equal to 2. At least one operating system runs on each virtual machine monitor. The N virtual machine monitors include the first virtual machine monitor and a second virtual machine monitor. The first virtual machine monitor 800 includes: an obtaining unit 801, configured to obtain a target access request, where the target access request is an access request initiated by an operating system in the vehicle for a hardware device in the vehicle; and a sending unit 802, configured to: if an access address of the target access request falls outside a management range of the first virtual machine monitor, send, by the first virtual machine monitor, indication information to the second virtual machine monitor, where the indication information is used to request the second virtual machine monitor to perform an access operation that the target access request points to.

In this embodiment of this application, isolation between different safety levels is implemented on both hardware and software. In addition, after the obtaining unit 801 obtains the target access request, when it is determined that the access address of the target access request falls outside the management range, the sending unit 802 sends the indication information to the second virtual machine monitor. The indication information is used to request the second virtual machine monitor to perform the access operation that the target access request points to. The foregoing process is implemented by using the virtual machine monitor, and no intrusive modification to the operating system is required, to avoid a large amount of modification to code of the operating system, and avoid lowering maintainability of the operating system.

In a possible design, when the operating system in the vehicle is in a running state, a first-type interrupt instruction generated by the hardware device in the vehicle is directly transferred to the operating system in the vehicle, and different virtual machine monitors communicate with each other by using a second-type interrupt instruction.

In a possible design, a safety level corresponding to the second virtual machine monitor is higher than a safety level corresponding to the first virtual machine monitor.

In a possible design, refer to FIG. 9. FIG. 9 is a diagram of a structure of a first virtual machine monitor according to an embodiment of this application. The first virtual machine monitor 800 further includes: an execution unit 803, configured to: if the access address of the target access request is within the management range of the first virtual machine monitor, in a first case, perform, by the first virtual machine monitor by using a virtual input/output VirtIO processing technology, the access operation that the target access request points to. The execution unit is further configured to: in a second case, perform, by the first virtual machine monitor by using a built-in driver, the access operation that the target access request points to.

In a possible design, the VirtIO technology is used to support sharing of the hardware device between a front-end operating system and a back-end operating system that run on the first virtual machine monitor. Stage2 page tables corresponding to a first thread and a second thread that run in the back-end operating system are different. The first thread is a thread used to perform the access operation on the hardware device shared between the front-end operating system and the back-end operating system. The second thread and the first thread are different threads. A memory address of the front-end operating system exists in the stage2 page table corresponding to the first thread. The memory address of the front-end operating system does not exist in the stage2 page table corresponding to the second thread.

In a possible design, the virtual machine monitor deployed in the vehicle is embedded.

In a possible design, the hardware devices of the N safety levels are deployed at a hardware layer. One virtual machine monitor runs on a hardware device of each safety level, and different virtual machine monitors run on hardware devices of different safety levels.

It should be noted that content such as information exchange and an execution process between the modules/units in the virtual machine monitor 800 is based on a same idea as the method embodiments corresponding to FIG. 2 to FIG. 7 in this application. For specific content, refer to the descriptions in the foregoing method embodiments in this application. Details are not described herein again.

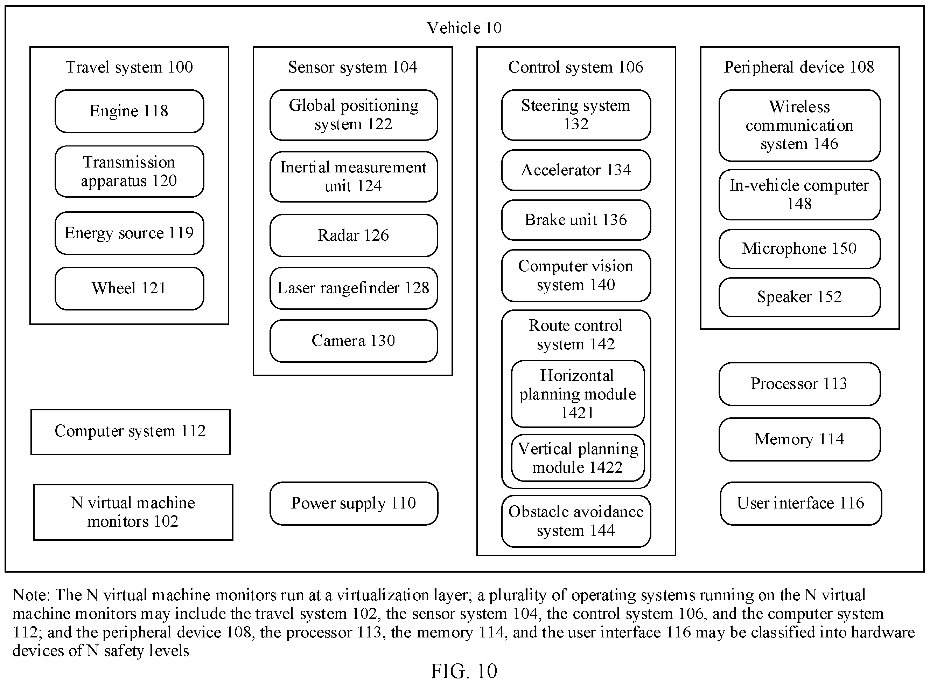

The following describes a vehicle provided in an embodiment of this application. FIG. 10 is a diagram of a structure of a vehicle according to an embodiment of this application. The vehicle 10 may be configured to be in a fully or partially autonomous driving mode. For example, the vehicle 10 may control itself in the autonomous driving mode, and through manual operations, may determine current states of the vehicle and a surrounding environment of the vehicle, determine possible behavior of at least one another vehicle in the surrounding environment, determine a confidence level corresponding to a possibility that the another vehicle performs the possible behavior, and control the vehicle 10 based on determined information. When the vehicle 10 is in the autonomous driving mode, the vehicle 10 may alternatively be set to operate without interacting with a person.

The vehicle 10 may include various operating systems, such as a travel system 100, a sensor system 104, a control system 106, and a computer system 112. A plurality of operating systems in the vehicle 10 may run on the N virtual machine monitors 101 shown in FIG. 1b. The vehicle 10 may further include hardware devices such as one or more peripheral devices 108, a power supply 110, a processor 113, a memory 114, and a user interface 116. The plurality of hardware devices in the vehicle may be classified into N safety levels. Optionally, the vehicle 10 may include more or fewer subsystems, and each subsystem may include a plurality of parts. In addition, each subsystem and part of the vehicle 10 may be interconnected in a wired or wireless manner.

A specific process in which the N virtual machine monitors 101 in the vehicle 10 perform a processing method for data in a vehicle is based on a same concept as the method embodiments corresponding to FIG. 2 to FIG. 7 in this application. For specific content, refer to the descriptions in the foregoing method embodiments of this application. Details are not described herein again.

The travel system 100 may include a component that provides power for the vehicle 10 to move. In an embodiment, the travel system 100 may include an engine 118, an energy source 119, a transmission apparatus 120, and wheels/tyres 121.

The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy. Examples of the energy source 119 include gasoline, diesel, another petroleum-based fuel, propane, another compressed gas-based fuel, ethanol, a solar panel, a battery, and another source of power. The energy source 119 may also provide energy for another system of the vehicle 10. The transmission apparatus 120 may transmit mechanical power from the engine 118 to the wheel 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more of the wheels 121.

The sensor system 104 may include several sensors that sense information about the surrounding environment of the vehicle 10. For example, the sensor system 104 may include a positioning system 122 (the positioning system may be a global positioning system GPS, a BeiDou system, or another positioning system), an inertial measurement unit (inertial measurement unit, IMU) 124, a radar 126, a laser rangefinder 128, and a camera 130. The sensor system 104 may further include sensors (for example, an in-vehicle air quality monitor, a fuel gauge, and an engine oil thermometer) of an internal system of the monitored vehicle 10. Sensor data from one or more of these sensors may be used to detect an object and corresponding features (a position, a shape, a direction, a speed, and the like) of the object. Such detection and recognition are key functions of a safe operation of the vehicle 10.

The positioning system 122 may be configured to estimate a geographical location of the vehicle 10. The IMU 124 is configured to sense a location and an orientation change of the vehicle 10 based on an inertial acceleration. In an embodiment, the IMU 124 may be a combination of an accelerometer and a gyroscope. The radar 126 may sense an object in the surrounding environment of the vehicle 10 by using a radio signal, and may be specifically represented as a millimeter-wave radar or a laser. In some embodiments, in addition to sensing the object, the radar 126 can be further configured to sense a speed and/or an advancing direction of the object. The laser rangefinder 128 may sense, by using a laser, an object in an environment in which the vehicle 10 is located. In some embodiments, the laser rangefinder 128 may include one or more laser sources, a laser scanner, one or more detectors, and another system component. The camera 130 may be configured to capture a plurality of images of the surrounding environment of the vehicle 10. The camera 130 may be a static camera or a video camera.

The control system 106 controls operations of the vehicle 10 and components of the vehicle 10. The control system 106 may include various parts, including a steering system 132, an accelerator 134, a brake unit 136, a computer vision system 140, a route control system 142, and an obstacle avoidance system 144.

The steering system 132 may be operated to adjust an advancing direction of the vehicle 10. For example, in an embodiment, the steering system 132 may be a steering wheel system. The accelerator 134 is configured to control an operating speed of the engine 118 and further control a speed of the vehicle 10. The brake unit 136 is configured to control the vehicle 10 to decelerate. The brake unit 136 may use friction to slow down the wheel 121. In another embodiment, the brake unit 136 may convert kinetic energy of the wheel 121 into a current. Alternatively, the brake unit 136 may reduce a rotational speed of the wheel 121 in another form to control the speed of the vehicle 10. The computer vision system 140 may be operated to process and analyze an image captured by the camera 130, to recognize an object and/or a feature in the surrounding environment of the vehicle 10. The object and/or the feature may include a traffic signal, a road boundary, and an obstacle. The computer vision system 140 may use an object recognition algorithm, a structure from motion (Structure from Motion, SFM) algorithm, video tracking, and another computer vision technology. In some embodiments, the computer vision system 140 may be configured to draw a map for an environment, track an object, estimate a speed of the object, and the like. The route control system 142 is configured to determine a traveling route and a traveling speed of the vehicle 10. In some embodiments, the route control system 142 may include a horizontal planning module 1421 and a vertical planning module 1422. The horizontal planning module 1421 and the vertical planning module 1422 are separately configured to determine the traveling route and the traveling speed of the vehicle 10 based on data from the obstacle avoidance system 144, the GPS 122, and one or more predetermined maps. The obstacle avoidance system 144 is configured to recognize, evaluate, and avoid or bypass obstacles in the environment around the vehicle 10 in another manner. The obstacles may be specifically represented as an actual obstacle and a virtual moving object that may collide with the vehicle 10. In an instance, the control system 106 may additionally or alternatively include a component other than the components shown and described. Alternatively, some of the foregoing components may be removed.

The vehicle 10 may interact with an external sensor, another vehicle, another computer system, or a user by using the peripheral device 108. The peripheral device 108 may include a wireless communication system 146, an in-vehicle computer 148, a microphone 150, and/or a speaker 152. In some embodiments, the peripheral device 108 provides a means for the user of the vehicle 10 to interact with the user interface 116. For example, the in-vehicle computer 148 may provide information for the user of the vehicle 10. The user interface 116 may further operate the in-vehicle computer 148 to receive a user input. The in-vehicle computer 148 may perform an operation through a touchscreen. In another case, the peripheral device 108 may provide a means for the vehicle 10 to communicate with another device located in the vehicle. For example, the microphone 150 may receive audio (for example, a voice command or another audio input) from the user of the vehicle 10. Similarly, the speaker 152 may output audio to the user of the vehicle 10. The wireless communication system 146 may wirelessly communicate with one or more devices directly or through a communication network. For example, the wireless communication system 146 may use 3G cellular communication such as CDMA, EVD0, or GSM/GPRS, use 4G cellular communication such as LTE, or use 5G cellular communication. The wireless communication system 146 may perform communication by using a wireless local area network (wireless local area network, WLAN). In some embodiments, the wireless communication system 146 may directly communicate with a device by using an infrared link, Bluetooth, or ZigBee. Other wireless protocols such as various vehicle communication systems may be used. For example, the wireless communication system 146 may include one or more dedicated short-range communication (dedicated short-range communication, DSRC) devices. These devices may include public and/or private data communication between vehicles and/or between roadside stations.

The power supply 110 may supply power to various components of the vehicle 10. In an embodiment, the power supply 110 may be a rechargeable lithium-ion or lead-acid battery. One or more battery packs of such a battery may be configured as a power supply to supply power to the various components of the vehicle 10. In some embodiments, the power supply 110 and the energy source 119 may be implemented together, for example, in some pure electric vehicles.

The processor 113 may be any conventional processor, such as a commercially available central processing unit (central processing unit, CPU). Optionally, the processor 113 may be a dedicated device such as an application-specific integrated circuit (application-specific integrated circuit, ASIC) or another hardware-based processor. The processor 113 and the memory 114 may actually include a plurality of processors or memories that are not stored in a same physical housing. For example, the memory 114 may be a hard disk drive or another storage medium located in a housing different from a housing of the computer system 112. Therefore, a reference to the processor 113 or the memory 114 is understood as a reference to a set of processors or memories that may or may not operate in parallel. Different from using a single processor to perform the steps described herein, some components such as a steering component and a deceleration component may include respective processors. The processor performs only computation related to a component-specific function.

In various aspects described herein, the processor 113 may be located far away from the vehicle 10 and wirelessly communicate with the vehicle 10. In another aspect, some of the processes described herein are performed on the processor 113 disposed inside the vehicle 10, while others are performed by a remote processor 113, including performing a step necessary for single manipulation.

In some embodiments, the memory 114 may include instructions (for example, program logic), and the instructions may be executed by the processor 113 to perform various functions of the vehicle 10, including the functions described above. The memory 114 may also include additional instructions, including instructions used to send data to, receive data from, interact with, and/or control one or more of the travel system 100, the sensor system 104, the control system 106, and the peripheral device 108. In addition to the instructions 115, the memory 114 may further store data, for example, a road map, route information, a location, a direction, and a speed of the vehicle and other such vehicle data, as well as other information. Such information may be used by various operating systems in the vehicle 10 during operation of the vehicle 10 in autonomous, semi-autonomous, and/or manual modes. The user interface 116 is configured to provide information for or receive information from the user of the vehicle 10. Optionally, the user interface 116 may include one or more input/output devices in a set of peripheral devices 108, for example, the wireless communication system 146, the in-vehicle computer 148, the microphone 150, and the speaker 152.

The computer system 112 may control the functions of the vehicle 10 based on inputs received from various operating subsystems (for example, the travel system 100, the sensor system 104, and the control system 106) and the user interface 116. For example, the computer system 112 may control the steering system 132 by using an input from the control system 106, to avoid an obstacle detected by the sensor system 104 and the obstacle avoidance system 144. In some embodiments, the computer system 112 may be operated to provide control over the vehicle 10 and the subsystems of the vehicle 10 in many aspects.

Optionally, one or more of the foregoing components may be installed separately from or associated with the vehicle 10. For example, the memory 114 may be partially or completely separated from the vehicle 10. The foregoing components may be communicatively coupled together in a wired and/or wireless manner.

Optionally, the foregoing components are merely examples. In actual application, a component in each of the foregoing modules may be added or deleted according to an actual requirement. FIG. 1b should not be understood as any limitation on embodiments of this application. An autonomous vehicle traveling on a road, for example, the foregoing vehicle 10, may recognize an object in a surrounding environment of the vehicle to determine an adjustment to a current speed. The object may be another vehicle, a traffic control device, or another type of object. In some examples, each recognized object may be considered independently, and the speed of the autonomous vehicle to be adjusted may be determined based on a respective feature of the object, such as a current speed and an acceleration of the object, and a spacing between the object and the vehicle.

Optionally, the vehicle 10 or a computing device (such as the computer system 112, the computer vision system 140, or the memory 114 in FIG. 1b) associated with the vehicle 10 may predict behavior of the recognized object based on the feature of the recognized object and a state (for example, traffic, rain, or ice on a road) of the surrounding environment. Optionally, all recognized objects depend on behaviors of each other, and therefore all the recognized objects may be considered together to predict behavior of a single recognized object. The vehicle 10 can adjust the speed of the vehicle 10 based on the predicted behavior of the recognized object. In other words, the vehicle 10 can determine, based on the predicted behavior of the object, a stable state to which the vehicle needs to be adjusted (for example, accelerated, decelerated, or stopped). In this process, another factor may alternatively be considered to determine the speed of the vehicle 10, for example, a horizontal location of the vehicle 10 on the road on which the vehicle travels, curvature of the road, and proximity of a static object and a dynamic object. In addition to providing an instruction to adjust the speed of the autonomous vehicle, the computing device may further provide an instruction to modify a steering angle of the vehicle 10, so that the vehicle 10 follows a given trajectory and/or keeps safe horizontal and vertical distances from an object near the vehicle 10 (for example, a car in an adjacent lane of the road).

An embodiment of this application further provides a computer program product. The computer program product includes a program. When the program is run on a computer, the computer is enabled to perform the steps performed by the first virtual machine monitor or the second virtual machine monitor in the methods described in the embodiments shown in FIG. 2 to FIG. 7.

An embodiment of this application further provides a computer-readable storage medium. The computer-readable storage medium stores a program. When the program is run on a computer, the computer is enabled to perform the steps performed by the first virtual machine monitor or the second virtual machine monitor in the methods described in the embodiments shown in FIG. 2 to FIG. 7.

An embodiment of this application further provides a processing system for data in a vehicle. The processing system for data in a vehicle is applied to the vehicle. The processing system for data in a vehicle includes N virtual machine monitors. The N virtual machine monitors correspond to hardware devices of N safety levels in the vehicle. The virtual machine monitor is deployed at a virtualization layer. N is an integer greater than or equal to 2. There is a first virtual machine monitor in the N virtual machine monitors. The first virtual machine monitor performs the steps performed by the first virtual machine monitor in the methods described in the embodiments shown in FIG. 2 to FIG. 7.

The virtual machine monitor provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the steps performed by the first virtual machine monitor or the second virtual machine monitor in the methods described in the embodiments shown in FIG. 2 to FIG. 7. Optionally, the storage unit is a storage unit in the chip, for example, a register or a cache; or the storage unit may be a storage unit that is in a radio access device end and that is located outside the chip, for example, a read-only memory (read-only memory, ROM), another type of static storage device that can store static information and instructions, or a random access memory (random access memory, RAM).

The processor mentioned anywhere above may be a general-purpose central processing unit, a microprocessor, an ASIC, or one or more integrated circuits that are configured to control program execution of the method according to the first aspect.

In addition, it should be noted that the apparatus embodiments described above are merely an example. The units described as separate parts may or may not be physically separate, and parts displayed as units may or may not be physical units, may be located in one place, or may be distributed on a plurality of network units. Some or all of the modules may be selected according to actual requirements to achieve the objectives of the solutions of embodiments. In addition, in the accompanying drawings of the apparatus embodiments provided by this application, a connection relationship between modules indicates that the modules have a communication connection with each other, and may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any function implemented by a computer program may be easily implemented by using corresponding hardware. In addition, specific hardware structures used to implement a same function may be various and may be, for example, an analog circuit, a digital circuit, or a dedicated circuit. However, in this application, a software program implementation is a better implementation in most cases. Based on such an understanding, the technical solutions of this application essentially or the part contributing to a conventional technology may be implemented in a form of software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or a part of the embodiments may be implemented in a form of computer program product.

The computer program product includes one or more computer instructions. When the computer program instructions are loaded and executed on a computer, all or some procedures or functions in embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Disk, SSD)), or the like.

## Claims

1. A processing method for data in a vehicle, wherein the vehicle comprises hardware devices of N safety levels and N virtual machine monitors corresponding to the hardware devices of the N safety levels, the virtual machine monitor is deployed at a virtualization layer, N is an integer greater than or equal to 2, at least one operating system runs on each virtual machine monitor, the N virtual machine monitors comprise a first virtual machine monitor and a second virtual machine monitor, and the method comprises:
obtaining, by the first virtual machine monitor, a target access request, wherein the target access request is an access request initiated by an operating system in the vehicle for the hardware device in the vehicle; and
if an access address of the target access request falls outside a management range of the first virtual machine monitor, sending, by the first virtual machine monitor, indication information to the second virtual machine monitor, wherein the indication information is used to request the second virtual machine monitor to perform an access operation that the target access request points to.

2. The method according to claim 1, wherein when the operating system in the vehicle is in a running state, a first-type interrupt instruction generated by the hardware device in the vehicle is directly transferred to the operating system in the vehicle, and different virtual machine monitors communicate with each other by using a second-type interrupt instruction.

3. The method according to claim 1 or 2, wherein a safety level corresponding to the second virtual machine monitor is higher than a safety level corresponding to the first virtual machine monitor.

4. The method according to claim 1 or 2, wherein the method further comprises:
if the access address of the target access request is within the management range of the first virtual machine monitor, in a first case, performing, by the first virtual machine monitor by using a virtual input/output VirtIO processing technology, the access operation that the target access request points to; or
in a second case, performing, by the first virtual machine monitor by using a built-in driver, the access operation that the target access request points to.

5. The method according to claim 4, wherein at least one operating system running on the first virtual machine monitor comprises a front-end operating system and a back-end operating system, the VirtIO technology is used to support sharing of the hardware device between the front-end operating system and the back-end operating system that run on the first virtual machine monitor, and stage2 page tables corresponding to a first thread and a second thread that run in the back-end operating system are different, wherein the first thread is a thread used to perform the access operation on the hardware device shared between the front-end operating system and the back-end operating system, the second thread and the first thread are different threads, a memory address of the front-end operating system exists in the stage2 page table corresponding to the first thread, and the memory address of the front-end operating system does not exist in the stage2 page table corresponding to the second thread.

6. The method according to claim 1 or 2, wherein the virtual machine monitor deployed in the vehicle is embedded.

7. The method according to claim 6, wherein the hardware devices of the N safety levels are deployed at a hardware layer, one virtual machine monitor runs on a hardware device of each safety level, and different virtual machine monitors run on hardware devices of different safety levels.

8. A virtual machine monitor, wherein the virtual machine monitor is configured to process data in a vehicle, the vehicle comprises hardware devices of N safety levels and N virtual machine monitors corresponding to the hardware devices of the N safety levels, the virtual machine monitor is deployed at a virtualization layer, N is an integer greater than or equal to 2, at least one operating system runs on each virtual machine monitor, the N virtual machine monitors comprise a first virtual machine monitor and a second virtual machine monitor, and the first virtual machine monitor comprises:
an obtaining unit, configured to obtain a target access request, wherein the target access request is an access request initiated by an operating system in the vehicle for the hardware device in the vehicle; and
a sending unit, configured to: if an access address of the target access request falls outside a management range of the first virtual machine monitor, send, by the first virtual machine monitor, indication information to the second virtual machine monitor, wherein the indication information is used to request the second virtual machine monitor to perform an access operation that the target access request points to.

9. The virtual machine monitor according to claim 8, wherein when the operating system in the vehicle is in a running state, a first-type interrupt instruction generated by the hardware device in the vehicle is directly transferred to the operating system in the vehicle, and different virtual machine monitors communicate with each other by using a second-type interrupt instruction.

10. The virtual machine monitor according to claim 8 or 9, wherein a safety level corresponding to the second virtual machine monitor is higher than a safety level corresponding to the first virtual machine monitor.

11. The virtual machine monitor according to claim 8 or 9, wherein the first virtual machine monitor further comprises:
an execution unit, configured to: if the access address of the target access request is within the management range of the first virtual machine monitor, in a first case, perform, by the first virtual machine monitor by using a virtual input/output VirtIO processing technology, the access operation that the target access request points to, wherein
the execution unit is further configured to: in a second case, perform, by the first virtual machine monitor by using a built-in driver, the access operation that the target access request points to.

12. The virtual machine monitor according to claim 11, wherein at least one operating system running on the first virtual machine monitor comprises a front-end operating system and a back-end operating system, the VirtIO technology is used to support sharing of the hardware device between the front-end operating system and the back-end operating system that run on the first virtual machine monitor, and stage2 page tables corresponding to a first thread and a second thread that run in the back-end operating system are different, wherein the first thread is a thread used to perform the access operation on the hardware device shared between the front-end operating system and the back-end operating system, the second thread and the first thread are different threads, a memory address of the front-end operating system exists in the stage2 page table corresponding to the first thread, and the memory address of the front-end operating system does not exist in the stage2 page table corresponding to the second thread.

13. The virtual machine monitor according to claim 8 or 9, wherein the virtual machine monitor deployed in the vehicle is embedded.

14. A computer program product, wherein the computer program product comprises a program; and when the program is run on a computer, the computer is enabled to perform the method according to any one of claims 1 to 7.

15. A computer-readable storage medium, wherein the computer-readable storage medium stores a program; and when the program is run on a computer, the computer is enabled to perform the method according to any one of claims 1 to 7.

16. A processing system for data in a vehicle, wherein the processing system for data in a vehicle is applied to the vehicle, the processing system for data in a vehicle comprises N virtual machine monitors, the N virtual machine monitors correspond to hardware devices of N safety levels in the vehicle, the virtual machine monitor is deployed at a virtualization layer, N is an integer greater than or equal to 2, there is a first virtual machine monitor in the N virtual machine monitors, and the first virtual machine monitor performs the steps performed by the first virtual machine monitor in the method according to any one of claims 1 to 7.

17. A vehicle, wherein the vehicle comprises hardware devices of N safety levels and N virtual machine monitors corresponding to the hardware devices of the N safety levels, the virtual machine monitor is deployed at a virtualization layer of the vehicle, N is an integer greater than or equal to 2, there is a first virtual machine monitor in the N virtual machine monitors, and the first virtual machine monitor performs the steps performed by the first virtual machine monitor in the method according to any one of claims 1 to 7.
